# EUROPEAN PATENT APPLICATION

(11) **EP 2 785 030 A1**
(43) Date of publication of application: **01.10.2014**
(21) Application number: 13305389.2
(22) Date of filing: 28.03.2013
(51) Int. Cl.: H04M 3/56, H04M 3/428, H04M 7/12

(54) **A method for initiating a telecommunications link between a first user and a multitude of remote users, and respective end device**

(71) Applicant: Thomson Licensing, 92130 Issy-les-Moulineaux (FR)
(72) Inventor: Ben Elhadj, Nabil, 2000 Antwerpen (BE)
(74) Representative: Arnold, Klaus-Peter

(57) **Abstract**

The method for initiating a telecommunications link between a first user and a multitude of remote users via a service provider network, comprising the steps of initiating a connection from the first user to a first remote user via a first branch, putting the connection to the first remote user on hold, initiating a connection from the first user to a second remote user via a second branch, requesting the service provider network to combine the first and the second branches, putting the connection to the first and second users on hold, initiating a connection from the first user to a third remote user via a third branch, and requesting the service provider network to combine the connection to the first and second remote users with the third branch.

## Description

### TECHNICAL FIELD

The invention relates to a method for initiating a telecommunications link between a first user and a multitude of remote users via a service provider network, in particular to a method for initiating a conference call based on a DECT standard.

### BACKGROUND OF THE INVENTION

Cordless Telecommunications is nowadays widely used in homes and small offices for making telephone calls, known as DECT (Digital Enhanced Cordless Telecommunications). The DECT standard specifies a means for a portable unit, such as a cordless telephone, to access a service provider network, e.g. a public telecoms network, via radio by using a base station coupled via a copper line or optical line with the telecoms network. DECT systems allow also to handle simultaneous calls and offer a common handling of them in various situations: PSTN double calls, VoIP multiple calls on a single line, as well as parallel call situations occurring in a multiple line DECT system. Clause 7.4.3.5 of the ETSI TS 102 527-3 V1.4.1 (2012-01) standard also includes related procedures for a 3-party conference call with established internal and/or external calls. As defined in clause 7.4.3.7, a 3-party conference takes place either between 3 PPs on the same FP, based on 2 internal calls, or between 2 PPs and one remote party , based on one internal + one external calls, or between 1 PP and 2 remote parties, based on 2 external calls. If the "Multiple lines" feature is implemented, the calls may be on two different lines.

RFC4579 is a specification defining conferencing call control features for the Session Initiation Protocol (SIP). This document builds on the Conferencing Requirements and Framework documents to define how a tightly coupled SIP conference works. SIP is a 3GPP signaling protocol widely used for controlling communications sessions such as voice and video calls over Internet Protocol (IP). The SIP protocol can be used for creating, modifying and terminating two-party (unicast) or multiparty (multicast) sessions. Sessions may consist of one or several media streams. Other SIP applications include video conferencing, streaming multimedia distribution, instant messaging, presence information and file transfer.

As specified in ETSI TS 102 527-3 V1.4.1, till today, the DECT standard doesn't support more than the conference call with two external parties (3way call). Once the 3way conference call is set up, the voice application on a gateway, to which a DECT handset of the user is coupled, sets up two active calls, and the audio mixing is done locally on the gateway by its DSP module.

The deal, is how the extend what is allowed by the DECT standard on related to conference to be able to make N way call, based only on two lines. The problem to make a conference call with a DECT handset comes from the fact that the DECT handset has only two logical lines dedicated for parallel calls. The problem is therefore how to make a conference call with N participants by using only two lines allowed by DECT until today.

### BRIEF SUMMARY OF THE INVENTION

The method for initiating a telecommunications link between a first user and a multitude of remote users via a service provider network, comprising the steps of initiating a connection from the first user to a first remote user via a first branch, putting the connection to the first remote user on hold, initiating a connection from the first user to a second remote user via a second branch, requesting the service provider network to combine the first and the second branches, putting the connection to the first and second users on hold, initiating a connection from the first user to a third remote user via a third branch, and requesting the service provider network to combine the connection to the first and second remote users with the third branch. Any further remote user can be included by repeating the last steps of the method.

In a preferred embodiment, the telecommunications link is a conference call, in particular a DECT conference call, and the service provider network comprises a SIP server adapted for combining the branches. The SIP server utilizes advantageously a "REFER" command to merge a new remote user within the SIP server to the conference call.

In a further aspect of the invention, the method utilizes a DECT handset coupled with a base station, e.g. a residential gateway, for connecting the user via the service provider network with the remote users to establish the conference call.

An end device for using the method is for example a DECT terminal or a DECT handset and is coupled via a base station, e.g. a residential gateway, with a service provider network.

### BRIEF DESCRIPTION OF THE DRAWINGS

Preferred embodiments of the invention are explained in more detail below by way of example with reference to schematic drawings, which show:
- Fig. 1: an arrangement for performing a multiuser telephone conference call, and
- Fig. 2a-g: a method for arranging a telephone conference call between a user comprising a DECT handset and a multitude of remote users,
- Fig. 3: a flow-chart for illustrating the method according to Figs. 2a-g, and
- Fig. 4a-d: a scenario for determining a packet loss in a 5 GHz band for a site as described with regard to Fig. 1.

### DETAILED DESCRIPTION OF PREFERRED EMBODIMENTS

It is to be understood that the figures and the description of the present invention have been simplified to illustrate elements that are relevant for a clear understanding of the present invention, while eliminating, for purposes of clarity, many other elements found in typical DECT delivery methods and systems. However, because such elements are well known in the art, a detailed discussion of such elements is not provided herein.

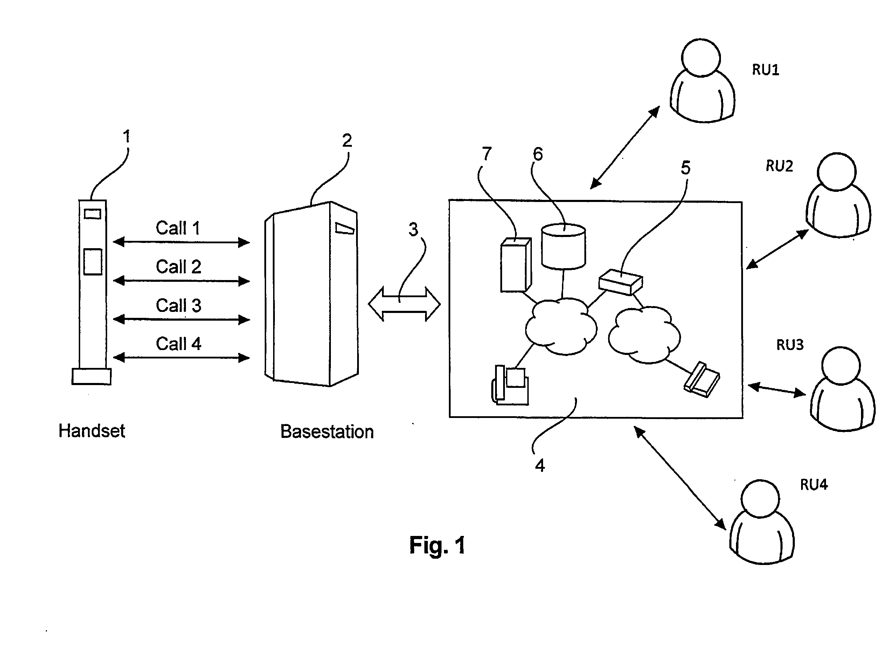

A preferred embodiment of an arrangement for performing a multiuser telephone conference call is shown in figure 1: a DECT handset 1 is connected with a base station 2 of a user, which base station 2 is coupled via a wide area network (WAN) connection 3 with a service provider network 4 providing Internet services. The connection 3 between the base station 2 and the NSP network 4 is for example an xDSL connection and the service provider network 4 a network service provider (NSP) network of an Internet service provider (ISP). The NSP network 4 comprises in particular a multitude of servers including a SIP Gateway server 5 and a Proxy Redirect Registrar server 7, and a location database 6. The NSP network 4 is further connected with a multitude of remote users, in this embodiment remote users RU1-RU4, so that the user is able to perform with its handset 1 phone calls with the remote users RU1-RU4 via the base station 2, the WAN connection 3 and the NSP network 4.

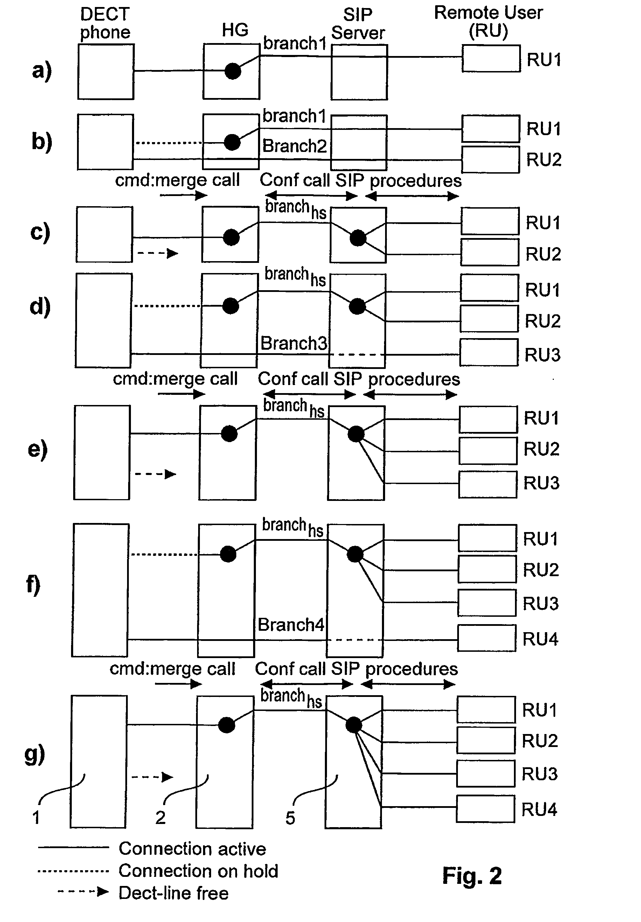

An exemplary method for arranging a telephone conference call between a user comprising a DECT handset 1 and a multitude of remote users RU1-RU4 is explained with regard to figures 2a-g. In a first step 1, the user uses its handset 1 to make a connection with the first remote user RU1 via the base station 2 and the SIP Server 5 of the NSP network, figure 2a. After the user is connected with the remote user RU1, indicated as line branch1, the user sets the connection to the remote user RU1 on hold and uses a transfer function of the DECT handset 1 to make a connection via the base station 2, SIP Server 5 with a second remote user RU2, step 2. The connection between the DECT handset 1 and the remote user 2 is indicated as branch 2. In a further step, the user requests via its DECT handset 1 the SIP server 5, to combine in the SIP server the connections to remote user 1 and remote user 2, step S3. When the remote users RU1 and RU2 are connected by the SIP server 5, the DECT handset 1 is connected only via a single branch, indicated as branchₕₛ, with the SIP server 5 and its second DECTs line is free, step S4. In a further step, the user uses the free line of its DECT handset 1 to make a connection to a further remote user RU3 via the base station 2 and SIP server 5, step S5. The connection between the DECT handset 1 and the remote RU3 is indicated in figure 2d as branch3.

When the user is connected with the remote user RU3 via branch3, the user requests via the transfer function of its DECT handset the SIP server 5 to merge the call with the remote user RU3 with the remote users RU1, RU2, and the user puts the branchₕₛ to the SIP server 5 on hold, step S6. When the remote user RU3 is connected within the SIP server 5 with remote users RU1, RU2, step S7, then the DECT handset 1 is connected via a single line with 3 remote users and has a second DECT line free, shown in figure 2e.

Further remote users are connected to the conference call by using the same procedure, as shown in figures 2 f and 2g for a remote user RU4. In step S8, the user makes a connection via the second line of the DECT handset 1 with the remote user RU4, branch4 as shown in figure 2f, which corresponds with figure 2d. In a next step S9, the user requests the SIP server 5 to merge the call with the remote user RU4 with the calls of the remote users RU1 - RU3, so that the DECT handset 1 is connected via a single line, branchₕₛ, with the SIP server 5 providing connections to the remote user RU1 - RU4, shown in figure 2g, which corresponds with figure 2e. Any remote user can be added by the same procedure, allowing therefore to arrange a conference phone call with a multitude of remote users, which is only limited by the capabilities of the SIP server 5, but not by the capabilities of the DECT handset 1.

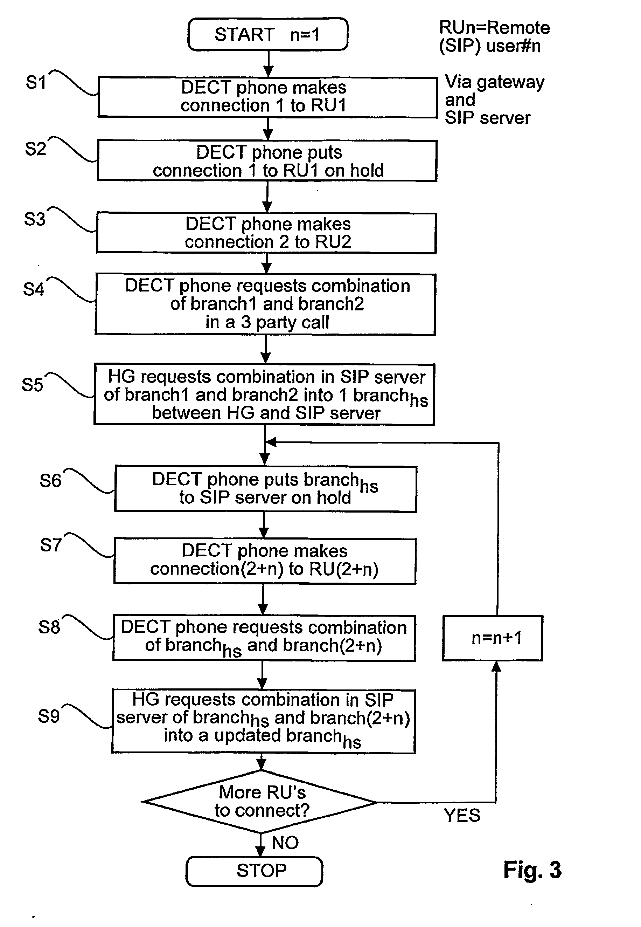

The method as described with regard to figure 2 is explained now with reference to a flow-chart shown in figure 3: When the user starts to arrange a conference call with a multitude of remote users, the user uses its handset to make a connection via the gateway and the SIP server with a first remote user RU1, step S1. Then, the user uses its handset to put the connection with the remote user RU1 on hold, step S2, and uses the transfer function of the handset to make a connection via the second line of the handset with a second remote user RU2, step S3. In step S4, the user uses the command "Merge call" of its DECT handset to request the SIP server to combine the call with the remote user RU2, branch2, with remote user RU1, branch1. The base station will request to combine in the SIP server branch1 and branch2 accordingly into a single line branchₕₛ between the base station and the SIP server, step S5. After performing step S5, therefore, a three-way conference call is arranged between the user and the two remote users RU1, RU2.

A further remote user is added by using the handset to put the line branchₕₛ between the base station and the SIP server on hold, step S6, and using the transfer function of the handset to make a connection to the further remote user, step S7. In step S8, the user uses the handset to request the SIP server to combine the line branchₕₛ with the line of the further user in the SIP server, which request is forwarded accordingly by the base station to the SIP server, step S9. After performing step S9, the user can make therefore with its DECT handset a conference call with three remote users via the updated line branchₕₛ.

If the user decides to add any further remote user to the conference call, he uses again the method steps S6-S9 to include the further remote user to the conference call. The method to arrange a conference call is therefore not limited to any number of users. If no further remote user is requested for the conference call, the users continue with the conference call.

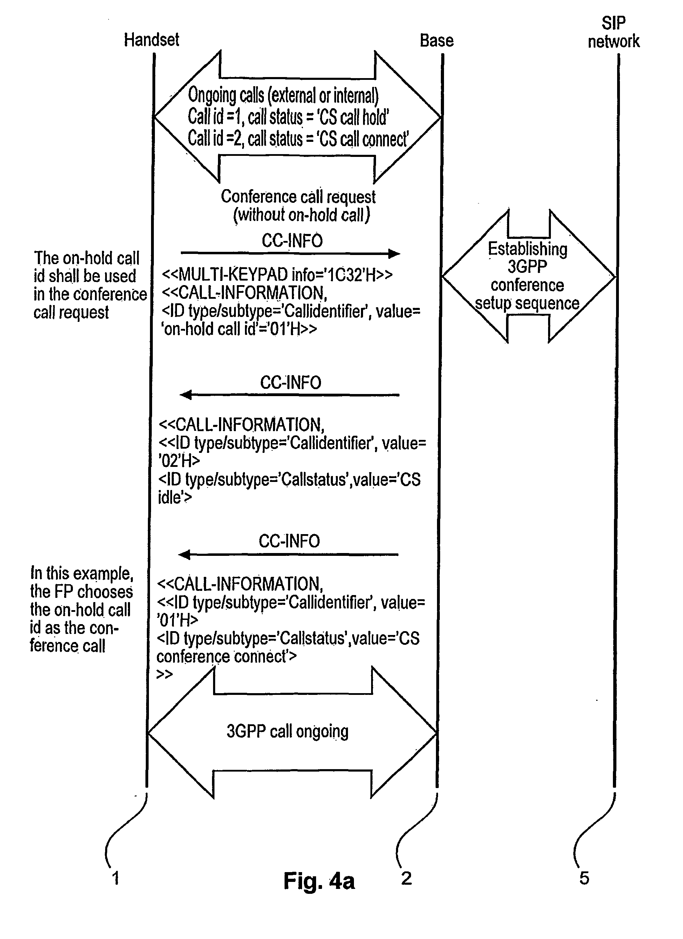

The DECT commands and actions necessary for arranging a conference call with a multitude of remote users is explained with regard to Figs. 4a-d: Between the DECT handset and the base station, an on-hold call ID will be used, ID=1, having a call status = 'CS call hold', and a call connect ID, ID=2 having call status = 'CS call connect'.

For a conference call request, with an on-hold call, the DECT handset 1 sends to the base station 2 the following conference call info data, Fig. 4a:
<< MULTI-KEYPAD, info= '1C32'H>>
« CALL-INFORMATION,
< id type/subtype = 'Call identifier', value =
'on-hold call id' ='01'H> >>

Wherein the on-hold call ID shall be used in the conference call request: '01'H. The base station returns then the following conference call info data:
<< CALL-INFORMATION,
< id type/subtype = 'Call identifier', value =
'02'H>
< id type/subtype = 'Call status', value = 'CS
idle' >
>>

In case of a hold command, the base station sends to the DECT handset the following conference call information:
<< CALL-INFORMATION,
< id type/subtype = 'Call identifier', value = '01'H>
< id type/subtype = 'Call status', value = 'CS
conference connect' >
>>

Then, a 3GPP conference call is running. Once the 3-way call gets running, in this moment there is only one line used by the conference call, the other line will be free. For an outgoing parallel call initiation, the DECT handset sends to the base station the following conference call information:
> MULTI-KEYPAD,< Keypad info ='1C15'H/
'17' H >>>

The base station sends then in response to this information an "INVITE" message to the SIP server, to hold the 3-way conference call. When the SIP server returns the message: "200 OK", the base station sends to the DECT handset the following information:
<< CALL-INFORMATION,
< id type/subtype = 'Call identifier', value =
'01'H>
< id type/subtype = 'Call status', value = 'CS
Call hold' >
>>

Further, the base station acknowledges the information to the SIP server with the command: "ACK" for acknowledgement.

For dialling in a new remote user, the DECT handset sends the following conference call information to the base station:
<< MULTI-KEYPAD, < Keypad info = 'called
number' >>>
« CALL-INFORMATION
< id type/subtype = 'Call identifier',
value = 'assigned call id'>
>>

The base station responds to this by sending an "INVITE" command to the SIP server, to which the SIP server responds by the command "180 RINGRING" for contacting the remote user. When a contact with the remote user is established, the SIP server sends the command "200 OK (INVITE)" to the base station, in response to which the base station sends an acknowledge message "ACK" to the SIP server and the base station sends the following information to the DECT handset:
« CALL-INFORMATION,
< id type/subtype = 'Call identifier', value =
'assigned call id'>
< id type/subtype = 'Call status', value = 'CS call Connected' >
»

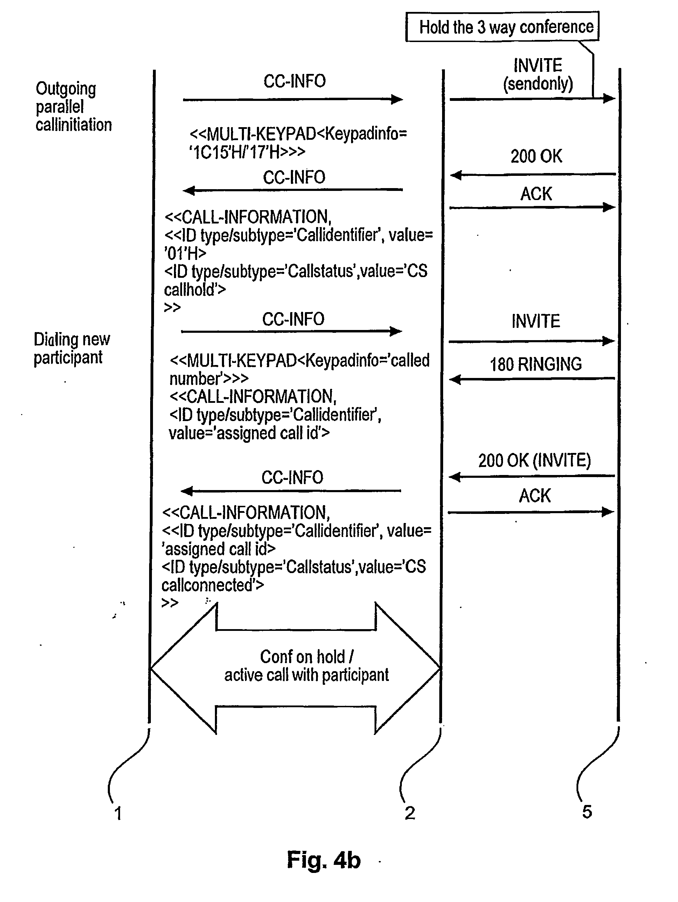

The conference call is then on hold with the new remote user, Fig. 4b.

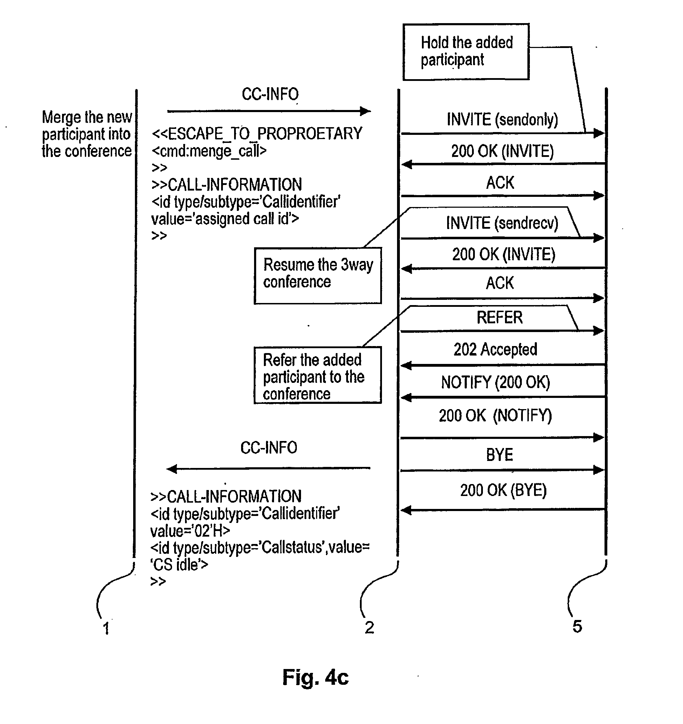

For merging the new remote user into the conference call, the DECT handset sends the following conference call information to the base station, as shown in Fig. 4c:
<< ESCAPE_TO_PROPRIATARY
<cmd: merge call>
>>
<< CALL-INFORMATION,
< id type/subtype = 'Call identifier',
value = 'assigned call id'>

The base station then sends an "INVITE (sendonly)" command to the SIP server, to hold the added remote user, and the SIP server responds with the message "200 OK (INVITE)", when the action is performed. The base station then acknowledges the "200 OK" command and sends in a further step the command "INVITE (sendrecv)" to the SIP server to resume the 3-way conference call. When having performed the action, the SIP server sends the message "200 OK (INVITE)" to the base station, after which the base station sends the command "ACK" for acknowledgement and sends the command "REFER" to the SIP server, to refer the added remote user to the conference call.

When the SIP server has added the new remote user to the conference call, it responds to the base station with the message "202 Accepted" and with the message "NOTIFY (200 OK)". The base station then sends to the SIP server the command "200 OK (NOTIFY)" and the following conference call information to the DECT handset:
« CALL-INFORMATION,
< id type/subtype = 'Call identifier', value =
'02'H>
< id type/subtype = 'Call status', value = 'CS
idle' >
»

In a further step, the base station sends to the SIP server the message "BYE", to which the SIP server then responds with the message "200 OK (BYE)".

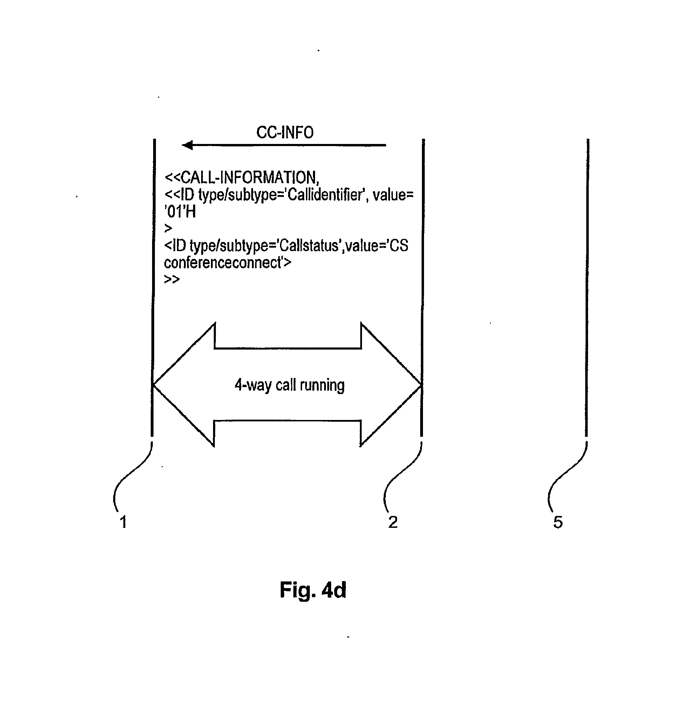

Finally, the base station sends, after having received from the SIP server the message "200 OK (BYE)", the following call information to the handset, as shown in Fig. 4d:
« CALL-INFORMATION,
< id type/subtype = 'Call identifier', value = '01'H>
>
< id type/subtype = 'Call status', value = 'CS
conference connect' >
»

Then, a conference call between a user and three remote users is established. Further remote users can be added accordingly.

The new remote user is added therefore to the conference call by sending a "REFER" request within the dialog of the ongoing call with that new remote user, in accordance with an RFC4579 recommendation. The "REFER" request contains the following headers:
- Refer-to header containing the <conf-id> received at conference establishment.
- Referred-By containing the identity of the used profile.

When the new remote user successfully joins the conference call, the dialog must be terminated. It may be terminated by the participant itself but the new remote user must send a BYE inside that dialog after it receives the NOTIFY that indicates that the REFER was successfully completed.

A DECT conference call can only be created from the state with one active call and one call on hold, both calls must be external.

Reference numerals appearing in the claims are by way of illustration only and shall have no limiting effect on the scope of the claims. Features disclosed in the description, the claims and the drawings may be provided independently or in any appropriate combination, and may be implemented, were appropriate, in hardware, software or a combination of both. Also other embodiments of the invention may be utilized by one skilled in the art without departing from the scope of the present invention. The invention resides therefore in the claims herein after appended.

## Claims

1. A method for initiating a telecommunications link between a first user (1) and a multitude of remote users (RU1-RU4) via a service provider network (4), comprising the steps of
initiating a connection from the first user to a first remote user via a first branch (S1),
putting the connection to the first remote user on hold (S2),
initiating a connection from the first user to a second remote user via a second branch (S3),
requesting the service provider network to combine the first and the second branches (S4, S5),
putting the connection to the first and second users on hold (S6),
initiating a connection from the first user to a third remote user via a third branch (S7), and
requesting the service provider network to combine the connection to the first and second remote users with the third branch (S8, S9).

2. The method of claim 1, wherein the telecommunications link is a conference call, in particular a DECT conference call.

3. The method of claim 1, or 2, wherein, for a connection to a further remote user at any time, the method comprises the steps of
putting the connection to the previous remote users on hold (S6),
initiating a connection from the first user to a further remote user via a further branch (S7),
requesting the service provider network to combine the previous remote users with the further remote user (S8, S9), and
continuing with the communications link.

4. The method of claim 1, 2 or 3, wherein the service provider network comprises a SIP server (5) adapted for combining the branches.

5. The method of one of the preceding claims, comprising the step of using a DECT handset coupled with a base station, e.g. a residential gateway, for connecting the user via the service provider network with the remote users.

6. The method of one of the preceding claims, comprising the step of adding a new remote user to the conference call within the SIP server by sending a "REFER" message in accordance with a RFC4579 recommendation to the new remote user within the dialog of the ongoing telecommunications link.

7. End device (1), utilizing a method according to one of the preceding claims.

8. The end device of claim 7, wherein the end device is a DECT terminal or a DECT handset.

9. The end device of claim 7 or 8, wherein the end device is coupled via a base station, e.g. a residential gateway, with a service provider network.
